# EUROPEAN PATENT APPLICATION

(11) **EP 3 051 445 A1**
(43) Date of publication of application: **03.08.2016**
(21) Application number: 15201076.5
(22) Date of filing: 18.12.2015
(51) Int. Cl.: G06F 17/50, B29C 67/00, B33Y 50/02

(54) **APPARATUS, PROGRAM AND METHOD OF PRODUCING A COMPUTER GENERATED MODEL OF A PART TO BE 3D PRINTED**

(30) Priority: 27.01.2015 GB 201501350
(71) Applicant: FUJITSU LIMITED, Kawasaki-shi, Kanagawa 211-8588 (JP)
(72) Inventor: GEORGESCU, Serban, London, Greater London W5 3JY (GB); KUBOTA, Tetsuyuki, Acton, Greater London W3 0NX (GB); CHOW, Peter, Gillingham, Kent ME7 3AH (GB)
(74) Representative: Fenlon, Christine Lesley

(57) **Abstract**

The invention relates to an apparatus (100) for producing a computer generated model of a part to be 3D printed, the apparatus (100) comprising: means (110) configured to create a computer generated model of the part, based on printing instructions for 3D printing the part, wherein the computer generated model represents the part as printed.

## Description

The present invention relates to a method of producing a computer generated model of a part to be 3D printed. The invention further relates to an apparatus and program for carrying out the same.

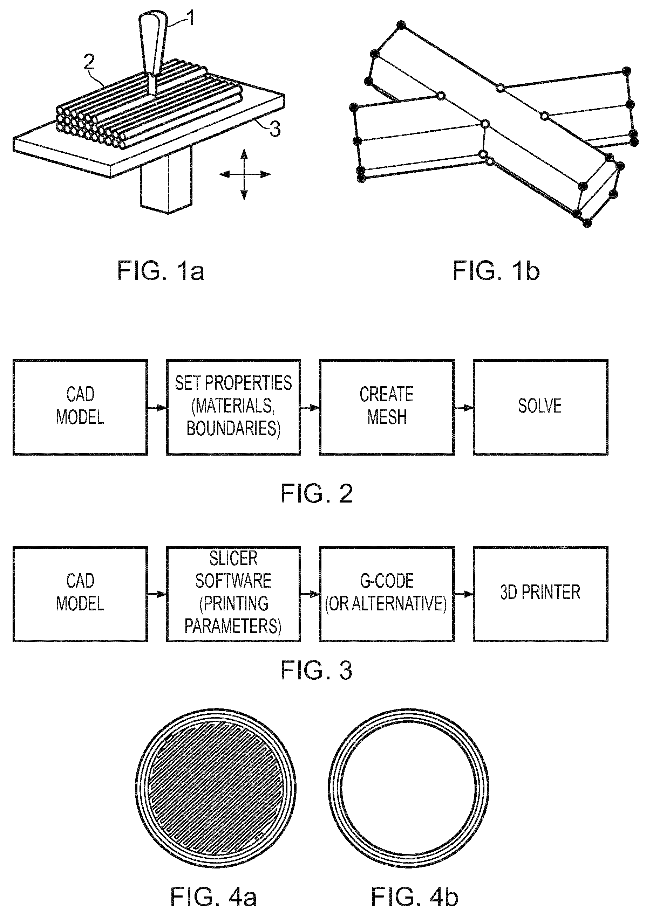

3D printing (or additive manufacturing) is a method by which a physical object is created from a digital model (i.e. CAD - computer-aided design or computer-assisted design, or STL - STereoLithography or Standard Tessellation Language) by laying down material in a layer-by-layer fashion. An advantage of 3D printing versus traditional (subtractive) manufacturing is that objects of almost arbitrary complexity can be easily created. While there are several 3D printing technologies available today, the most widely used technology in low cost 3D printers is Fused Deposition Modelling or FDM (also called Fused Filament Fabrication or FFF). In this type of 3D printing, which is shown in a simplified example in figure 1a, material 2 (usually, but not exclusively, a thermoplastic) is extruded through a heated nozzle 1 and laid out in the desired shape. In the example shown in figure 1a, segments of extruded filament (material 2) are positioned on a print bed 3.

With the increased availability of cheap FDM 3D printers and 3D models ready for printing, it is expected that both industry and consumers will make use of this method to create complex functional parts which are both light and structurally strong.

For objects manufactured using traditional methods, such as moulding, it is customary to perform stress analysis prior to manufacturing in order to assess: the quality of the design, the maximum amount of force (stress) that the object can withstand without breaking, or its expected deformation. Such analysis can be performed using available tools provided by ISVs (independent software vendors) such as Autodesk, Dassault Systemes or Ansys or with OSS (Open Source Software) such as Code Aster, all of which employ numerical methods such as the Finite Element Method.

At present however, the accuracy of such stress analyses varies greatly depending on many factors including the type of software on which the analysis is carried out, the complexity of the object being manufactured, the skill of the person carrying out the analysis and the characteristics of the material used for manufacture.

It is therefore desirable to provide a model on which more consistent, accurate stress analysis can be performed.

An embodiment of the present invention can provide a system able to perform structural analysis simulation, for an object 3D printed via Fused Deposition Modelling (FDM) method, more accurately than traditional methods.

According to an embodiment of an aspect of the invention there is provided a method of producing a computer generated model of a part to be 3D printed, the method comprising: creating a computer generated model of the part, based on printing instructions for 3D printing the part, wherein the computer generated model represents the part as printed.

A computer generated (CG) model of a part, which model is based on the printing instructions for the part, more closely mimics the configuration and nature of the resultant printed part. Thus, the CG model will therefore behave, when put through various tests (for example stress analysis), in a more similar manner to the printed part than a CG model which does not take into account the way the part is 3D printed. For example, even in the case of multiple 'identical' parts printed using the same 3D printer (multiple prints of the same model), the printing direction alone can have a major effect on the mechanical properties of the printed part.

A computer generated model may be any computer generated representation of a part, for example a digital model, a CAD model or an STL model. Such a CG model may include for example information on the bulk mechanical properties of the extrusion material to be used for printing, information on where and how different layers of extrusion material will be fused together, and/or typical values of stiffness and rigidity of the resultant printed part obtained from previously produced models using similar materials and connections. Such a CG model may also take into account the change in structure/properties of extrusion material before and after fusing. By the method of the present embodiment, the practical implications of production by 3D printing become easier to predict and account for, such as expansion or contraction of material during printing, impurities associated with printing using a particular material, and/or any fluid changes in material during extrusion. Further, the process of producing a part by constructive rather than destructive methods means that printed materials may not be entirely uniform in structure, or indeed molecular structure, which may lead to inhomogeneity throughout the resulting part. Such irregularity, or unexpected regularity, may cause the part to behave differently to an equivalent part created through traditional, destructive manufacturing methods, where the material of the part is homogenous (regular) or machined in such a way to intentionally be either regular or irregular. Such differences between parts may not be visible or immediately apparent, because the parts may look identical. Therefore, accurate CG models of the parts are important so that 3D printed parts can obtain similar properties to the traditionally manufactured equivalent parts, or any differences between the parts may be known to a high level of accuracy before production.

The method according to an embodiment of the present invention therefore does not simulate the design of the part, as is the case with traditional analysis tools, but instead the part as 3D printed.

A further advantage of the method used here to create the CG model is that it avoids the occurrence of hanging nodes, which may result when intersections between filament sections are not handled properly. Figure 1b shows an example of the occurrence of hanging nodes. Hanging nodes, shown in figure 1b as hollow circles, occur when meshes for filament sections overlap and when connectivity between the two meshes is not properly handled. In this example, a hanging node occurs at each point when a node, which is at a location occupied by two models, is present in one filament mesh, but not in the other. The peripheral nodes shown in figure 1b are non-hanging nodes. The more centrally located nodes, which occur at the point of overlap between the two meshes, are hanging nodes.

Optionally, the computer generated model is created by simulating movement of a printer extruder head and defines the computer generated model in terms of a path of the movement of the printer extruder head when printing.

By reproducing the physical actions carried out by the printer, in order to print the part, in the creation of a CG model, the structure and formation of the part can be replicated more precisely. This means that the CG model will represent not only the part once printed, but also how the part is printed. A model produced according to the method of the present embodiment therefore remains an accurate representation of the printed part, because the printing instructions, on which the CG model is based, include amongst other things the direction of movement of the printer extruder head nozzle. This provides the advantage of highlighting any flaws in the printing path which may compromise the structural properties of the part, so that these may be identified and the printing path changed as desired. This further gives a more accurate representation of the structure of the printed part, which can have a significant effect on the mechanical properties of the part. For example, a part in the shape of a long cylinder, when printed along its longitudinal axis, will have a different structure and therefore different structural properties to an equivalent part printed along the same axis, but in the opposite direction. The ability to predict these characteristics may be used to improve the reliability and consistency of the properties of the parts being produced.

Optionally, the printing instructions include information indicating the size and shape of the extrusion material used to 3D print the part.

Extrusion material will, depending on viscosity, normally take the shape of the extrusion head nozzle as it is extruded out through the nozzle. Therefore, knowing the shape of the extrusion head nozzle and the ultimate shape the extrusion material will likely have once fused provides the advantage that a more precise CG model (more precise representation of the part) can be produced. Knowing the size of the extrusion material (e.g. knowing the cross-sectional diameter of the material once fused), which is also closely related to the diameter of the extrusion head nozzle, can further help to identify advantageous sizes of extrusion material to obtain the desired bulk mechanical properties of the part, whilst reducing the amount of material required to obtain these properties. Knowing the shape that the extrusion material assumes during printing provides the advantage that adjacent sections of the part can be connected in a predictable manner.

Optionally, the computer generated model comprises a mesh generated based on the representation of the printed part.

By using the representation of the printed part as basis for the mesh applied to the CG model, the elements of the mesh may be created or adapted so as to improve the accuracy of the model for the purpose of carrying out analyses without overcomplicating the mesh, which would increase the processing burden for the creation of the mesh and for subsequent analysis. Initially, the CG model would not normally have a mesh already applied. Therefore, once the CG model is obtained, a mesh may be applied to the model which is appropriate for the type of analysis being carried out and the complexity of the part.

Optionally, the mesh is a finite element mesh based on generic printing code (G-code) instructions.

By producing the mesh based on generic printing code, the applicability of this method is made compatible with most 3D printing systems. Basing the mesh on generic printing code also has the benefit that most printing codes are developed to be easily converted to generic code. This means that whatever printing code is used, widely tried and tested code conversion may be used to bring the printing code back to a format from which a model may be produced.

Optionally, elements in the finite element mesh are hexahedral, tetrahedral and/or wedge elements.

Defining the mesh as having specifically shaped elements can reduce the processing burden during meshing. If a greater level of accuracy is achievable using a combination of element shapes however, these element shapes may be combined (a mesh may be produced containing different element shapes).

Optionally, the computer generated model further includes information indicating an amount of deformation which extrusion material is expected to undergo during printing, based on the extrusion material used.

During printing, the extrusion material would be expected to change shape slightly due to extrusion material of one layer coming into contact with that of another layer. Further, the weight of upper layers of extrusion material could also cause deformation of the extrusion material of lower layers. Further still, extrusion material within a layer may bond to adjacent extrusion material which may cause slight deformation of the extrusion material. During printing the fusing of adjacent sections of extrusion material and the overall hardening of the part may also result in a slight change in the size and/or shape of the part. By taking these, potentially only slight, changes into account a more accurate representation of the finished part can be created.

Optionally, the printing instructions include a combination of primitive movements, which are repeatable movement patterns for printing simple geometric shapes.

In order to simplify processing, complex shapes may be divided into a number of simple printer movements. These simple (primitive) movements also allow for more predictable analysis results, because the repeated use of the movements in the printing of parts means that analysis data relating to parts resulting from these movements may continuously be obtained and updated. Primitive movements may be used for example when large, regular and/or uncomplicated sections of a part are to be printed. Primitive movements may also be used when more predictable characteristics of the printed part are required. Due to increased frequency of use, more data will be collected on the characteristics of parts resulting from primitive movements than other printing patterns, thus leading to a more reliable collection of analysis results.

Optionally, the computer generated model comprises one or more section elements, which each comprise one or more finite elements and represent an extrusion path of printing material.

A section element is a combination of one or more finite elements which are used to approximate a section or the whole of a printed part. Section elements represent a simplified structure of a part or a section of a part and provide an approximation of the structural characteristics of the section or part. An advantage of using section elements is that the processing burden during structural analysis is significantly reduced. Therefore, for example when the predicted mechanical properties of a part far exceed what is required of the printed part, section elements may substitute a part in the CG model, which will reduce analysis time but maintain a reasonable level of accuracy of the analysis results.

A further embodiment of the invention includes a method of carrying out structural analysis on the computer generated model produced as described above, wherein the printing instructions for the computer generated model are changed based on the structural analysis to improve the properties of the computer generated model representing the mechanical properties of the printed part.

One advantage of the method of producing a CG model according to the present invention is that the structural analysis carried out on the CG model will more closely represent the behaviour of the corresponding printed part. Therefore, once structural analysis has been carried out on the CG model, the printing instructions, from which the CG model is derived, may be changed. For example, if the CG model indicates that the part will not have the desired structural properties, the printing instructions, and therefore the (or a subsequent) CG model, may be amended accordingly. An example of such an amendment would be to change the printing material (extrusion material), to increase the dimensions of the part or to change the structure of the existing CG model by changing the print sequence but not changing the appearance of the CG model, i.e. the dimensions of the part may be the same, but printed in a different order. Alternatively, a part may show satisfactory properties, but individual characteristics may be changed in order to obtain modifications in the size, shape, material, etc of the printed part.

A further embodiment of the invention includes a method of carrying out structural analysis on the computer generated model produced as described above, wherein the printing instructions for the computer generated model are changed based on the structural analysis to achieve predetermined properties of the computer generated model, representing the mechanical properties of the printed part, while reducing an amount of material required to print the part represented by the computer generated model.

A further advantage of carrying out analysis on a CG model created based on printing instructions is that the ultimate size of the part will be known to a high level of accuracy. Therefore, an amount of extrusion material required to print a part can also be calculated. For more industrial applications, a reduction in the amount of material used, even if slight, can have large cost implications. Therefore, when carrying out structural analysis on the CG model, a minimum required amount of extrusion material may be determined in order to achieve desired mechanical properties. Further, by changing the printing instructions, similar mechanical properties can be achieved with less material used. For example, printing a layer of a part may include printing (substantially) parallel lines of extrusion material, in order to achieve a desired level of rigidity of the layer. Such a layer may however alternatively be printed using a honeycomb pattern or similar, which offers the same or similar overall rigidity of the layer, once printed, but uses substantially less material.

A further embodiment of the invention includes a program for carrying out the method as described above.

The method described may for example be implemented in hardware, or as software modules running on one or more processors. An embodiment of the invention also provides a computer program or a computer program product for carrying out any of the methods described herein, and a computer-readable medium having stored thereon a program for carrying out any of the methods described herein. A computer program embodying the invention may be stored on a computer-readable medium, or it could, for example be in the form of a signal such as a downloadable data signal provided from an Internet website, or it could be in any other form.

A further embodiment of an aspect of the invention includes an apparatus for producing a computer generated model of a part to be 3D printed, the apparatus comprising: means configured to create a computer generated model of the part, based on printing instructions for 3D printing the part, wherein the computer generated model represents the part as printed.

The invention may be realised on a device which includes a CG model creation unit which is configured to create a computer generated model of a part, based on printing instructions for 3D printing the part, wherein the computer generated model represents the part as printed.

In an embodiment, the device may be included in a system, where the system further includes a 3D printer for printing the part, once a CG model representing the part has been created.

The device may be realised by one or more functional modules in the form of hardware configured specifically for carrying out the functionality of the modules. The functional modules may also be realised by instructions or executable program code which, when executed by a computer processing unit, cause the computer processing unit to perform the functionality attributed to the functional module. The computer processing unit may operate in collaboration with one or more of memory, storage, I/O devices, network interfaces, sensors (either via an operating system or otherwise), and other components of a computing device, in order to realise the functionality attributed to the functional module. The modules may also be referred to as units, and may be steps or stages of a method, program, or process.

The device may be realised by a single entity such as a computing device or server, or may be realised by more than one computing device operating collaboratively, for example, as a layer of a control protocol. Therefore, each functional module may be executed by components belonging to a plurality of computing devices, and the functional modules may be provided by more than one computing device.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

The invention is described, by way of example only, with reference to the following drawings, in which:
Figure 1a is a perspective view of a simplified example of a part being 3D printed;
Figure 1b is a perspective view of a (part of a) meshed CG model;
Figure 2 is a flow chart of an example of traditional analysis carried out on a CG model;
Figure 3 is a flow chart of an example of processing from a CAD model to a 3D printer;
Figures 4a - 4e show examples of different types of print patterns;
Figure 5 is a comparative example showing the state of the art compared with an embodiment of the present invention;
Figure 6 is a flowchart of an example of finite element analysis according to the state of the art;
Figure 7a is a flowchart of a simplified example of finite element analysis in accordance with an embodiment of the present invention;
Figure 7b is an apparatus according to an embodiment of the present invention;
Figure 7c is flowchart of a method according to an embodiment of the present invention;
Figure 8 is a flowchart of an example of an optimization process based on finite element analysis in accordance with an embodiment of the present invention;
Figure 9a is a cross-sectional view of extrusion material showing potential deformation;
Figure 9b is a cross-sectional view of extrusion material showing potential deformation between adjacent layers;
Figure 10 is a cross-sectional view of extrusion material showing both vertical and lateral deformation;
Figure 11 shows examples of the application of primitive 1;
Figure 12 is a cross-sectional view of three section elements;
Figure 13 is a perspective view of a section element;
Figure 14 is a perspective view of three connected section elements;
Figure 15 shows examples of the application of primitive 2;
Figure 16 shows examples of parallel connection of section elements;
Figure 17 shows an example of the application of primitive 3;
Figure 18 shows an example of a connection of section elements;
Figure 19 shows an example highlighting the middle section element following a non-parallel in-layer connection;
Figure 20 shows an example of the application of primitive 4;
Figure 21a shows an example of a parallel inter-layer connection for two horizontally aligned section elements;
Figure 21b shows an example of a parallel inter-layer connection for two horizontally non-aligned section elements;
Figure 22 shows an example of the application of primitive 5;
Figure 23 shows an example of a non-parallel, inter-layer connection for two section elements.

Traditional computer generated model analysis methods as implemented in both ISV and OSS software available today simulate the design of an object (part). An example of such analysis proceeds as shown in figure 2.

The underlying assumption of such an analysis is that the object being simulated is a solid made from one (or several) homogenous materials. However, such an assumption is not always satisfied in the case of FDM 3D printing.

A simplified version of the process of transforming a CAD model into a 3D printed object is shown in figure 3. Note that here we use the word "CAD" in the broader sense of "digital design". For example, a scanned 3D object will also fit in this category. CAD may further refer to any other type of computer generated model.

A CAD model (either directly or, in general, after conversion to a triangulated format such as STL) is read by slicer software. The slicer software is responsible for reading the 3D model and converting it into instructions that can be followed by the 3D printer. While slicer software offers many options, the following ones are especially relevant to the structure of the 3D printed object:
- Number of loops: the number of shells around the surface (boundary) of the printed solid that will be printed. These generally become perimeters in each layer.
- Infill ratio: a parameter between 0 and 1 where 0 represents a hollow solid (hollow area) (no infill) while 1 represents a full solid.
- Infill pattern: the type of structure that will replace the interior of the solid. Many types are available, with honeycomb, line and concentric being some of the most used ones.
- Layer height: The Z-height (Z-dimension height) of the layer, usually between 0.1 mm and 0.4mm. The smaller the layer size, the more "squishing" (i.e. flattening/deformation) and bonding between layers will take place.

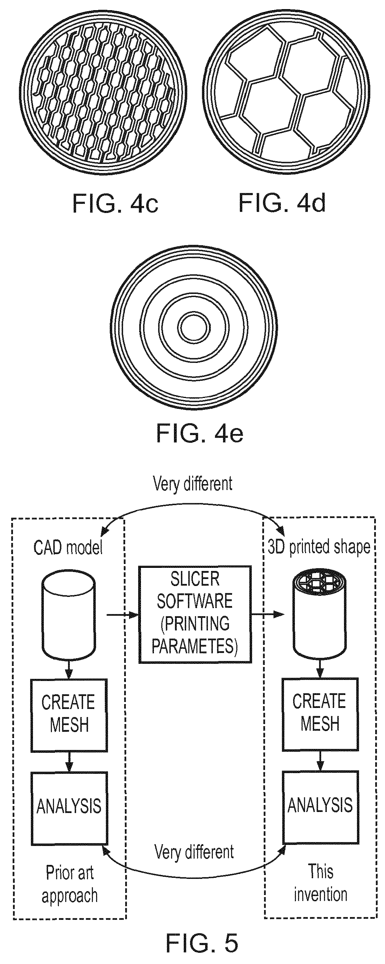

Figures 4a - 4e depict cross-sectional views (as seen in plan) of a cylinder model to be 3D printed. Figure 4a shows an example of printing with 3 outside loops and full infill (infill=1). In this case adjacent lengths of extrusion material (infill) may be fused together. Printing instructions may include the exact path taken during printing, where to begin and end the extrusion of material making up the part, the size (thickness) and shape of the extrusion material. Figure 4b shows an example of hollow printing (infill = 0). In this case the outer loops may be fused together and the central area (which has the infill in figure 4a) left without any infill. Figure 4c shows an example of print with infill = 0.7 and a honeycomb pattern. Figure 4d shows an example of print with infill = 0.2 and honeycomb pattern. Figure 4e shows an example of print with infill = 0.3 and concentric pattern.

The slicer software outputs all information necessary for the 3D printer to print the model into a generic format known as G-Code. This format is then read, interpreted and executed by the 3D printer firmware.

As can be clearly seen from figures 4a - 4e, there is very big difference between the original CAD model, which is a solid, and the object as printed, with its complicated layered structure. As such, the accuracy of traditional - CAD based - analysis tools is very low. This is illustrated in figure 5.

Structural analysis is used to decide regions of the 3D printed model that are likely to break. One method uses only the surface triangulation (STL) of the geometry and does not create a 3D mesh. This method is similar to the traditional analysis in the sense that what it being simulated is again the design rather than the complex layered structure that is being printed.

An underlying problem of existing structural analysis methods when used for objects 3D printed via FDM is that they create the analysis model either starting from the initial CAD model or from a different geometric representation of this model (e.g. STL format). A model created in such a way cannot account for the inhomogeneous and layered nature of the 3D printed object. Therefore the accuracy will be very low. This process is shown in figure 5.

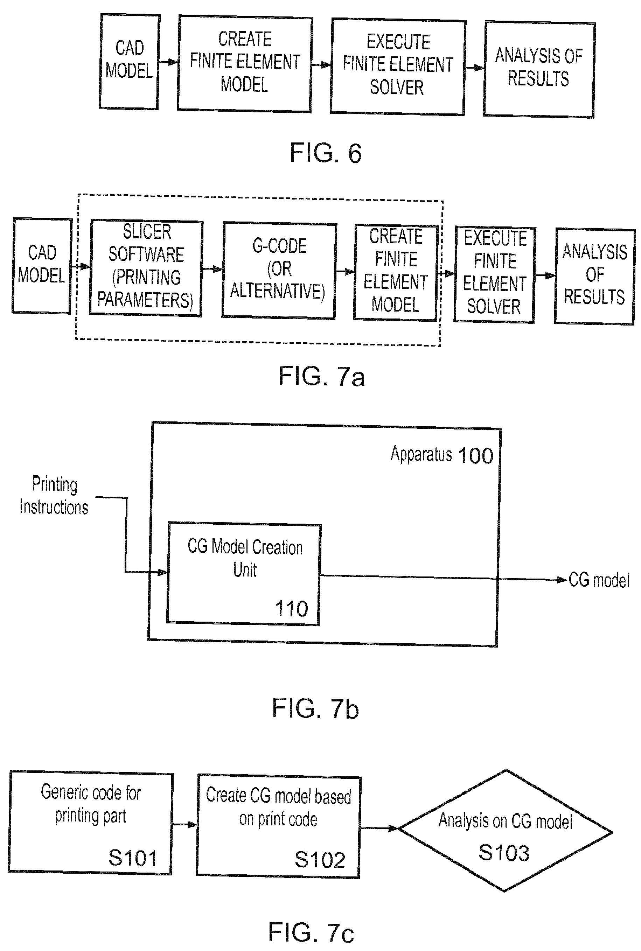

To solve the above problem, an embodiment of the present invention includes a method where the structural analysis model (i.e. the Finite Element model) is created directly from the G-Code data created by the slicer software. The layout of the proposed process is shown in figure 6. This model can capture all the structural properties of the FDM printed 3D object.

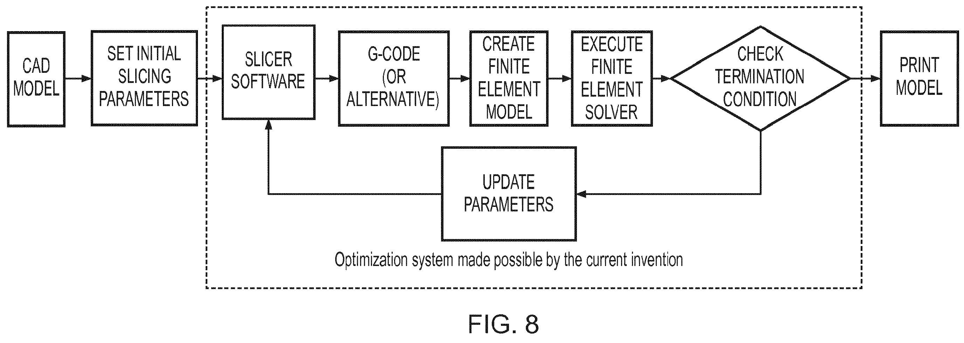

Besides providing a more accurate computational model for structural analysis, the proposed method can be combined with an optimizer and used to provide an automatic way of choosing suitable printing parameters. One example of such improvement through the optimizer is the reduction of material used in a print while still keeping the necessary strength requirements by automatically choosing suitable infill parameters. A flowchart of such method is shown in figure 8 where the termination condition could be related to the maximum allowed deformation.

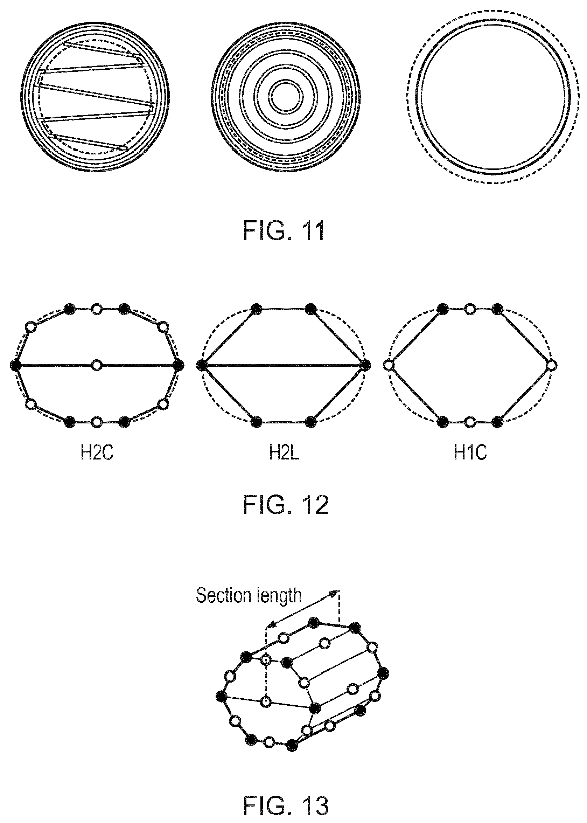

Finally, the FEM model generated in accordance with an embodiment of the present invention can be used as an intermediate step of generating a CAD model corresponding to the 3D model (i.e. different to the original CAD model). This new CAD model can then be meshed with a different mesh generator or can be used for other purposes. Using figure 12 as a guide, this can be achieved by reconstructing the dotted line, which represents the filament segment, from the mesh elements.

In an embodiment as depicted in figure 7b, the invention may be realised on an apparatus 100, which may be a computer, processor or similar. The apparatus 100 comprises a CG model creation unit 110, which creates a computer generated model of a part, based on printing instructions for 3D printing the part, wherein the computer generated model represents the part as printed. The CG model creation unit 110 receives an input of printing instructions, which may be in generic code or a specific print code language appropriate to a printer intended to be used to print the part. The CG model creation unit 110 then creates a CG model based on the printing instructions, e.g. by converting the printing instruction file into a CAD (or similar) file format. Another method of creating the CG model is to read the printing instructions and, in the virtual environment of the CAD software, 'print' the part as a CG model. That is to say, produce a CG model according to the printing instructions by following the printing process, only instead of a physical part being produced a CG model is created in the virtual environment of the CAD software.

The produced CG model may then have structural analysis carried out on it so as to test the various properties of a part printed according to the model. Features of the model may then be changed or adapted to alter the properties of the model, for example to obtain desired structural or aesthetic properties or for any other reason. This structural analysis may be carried out in the apparatus 100 or the CG model may be output to a separate processor for the analysis to be carried out. The model may then be sent to a 3D printer for printing. When sent to a 3D printer, the model is converted to an appropriate printer code (file format) for printing.

Further, figure 7c shows a flowchart of the process carried out on the apparatus of figure 7b. Figure 7c includes the optional step of performing analysis on the CG model. The method according to figure 7c includes obtaining generic code for printing a part S101, creating a CG model based on the code S102 and, optionally, performing analysis on the CG model, once produced, to determine the structural properties of a part printed according to the CG model.

According to an embodiment of the present invention an FEM model starting from G-code data may be created. Creating the FEM model may comprise three actions:
1) Create an FEM mesh
2) Set boundary conditions
3) Set material properties

With regard to action 3), current FDM 3D printers can print using a choice of materials as extrusion materials including thermoplastics, the most widely used being PLA (polylactic acid), ABS (acrylonitrile butadiene styrene) and NYLON. While there are differences in material properties between manufacturers, it may be reasonable to assume that the user will either get the material properties from the manufacturer or use generic (average) properties. The material properties of a material used to print the part may be included in the printing instructions. Alternatively, printing instructions may simply indicate the material and the corresponding properties may be known by the CG model creation unit 110.

Action 2) can be performed using CAE (computer aided engineering) pre-processing systems. Once the Finite Element mesh has been created, the relevant node and elements groups can be either manually or automatically selected and the required boundary conditions can be set. It is also possible to set the boundary conditions on the initial CAD or STL model and then automatically transfer this information to the mesh generated from the G-Code data. This is likely to be the case when used inside a loop (steps performed according to the flowchart) such as the one shown in figure 8.

Action 1) is a step in which a Finite Element mesh is created starting from the G-Code instructions. Note that the following description is made using hexahedral elements. These have been shown to be generally more accurate than tetrahedral and wedge elements and also lead to smaller problem sizes. Therefore, the following description is provided based on hexahedral elements. However, while not explicitly covered here, it is also possible to created meshes using different element types, such as tetrahedral elements, wedge elements or a combination of multiple different element types.

In the following example, the G-Code instruction G1 (Controlled Move) is used in order to reconstruct the extrusion path of the filament (extrusion material). The G1 instruction is in general found in the form G1 XVAL, YVAL, EVAL, where XVAL, YVAL represent the new point in the current Z plane where the extruder is to be moved and EVAL representing the amount of filament that is to be extruded. In this example, it is assumed that the 3D printer is well calibrated so that the correct amount of material is extruded and the EVAL is correct. Starting from the origin and connecting to the (XVAL, YVAL) we can reconstruct the path of the extruder head in the current plane. Note that in this example we ignore extruder movements which are not intended for extruding materials (i.e. only for moving the head to a different part of the model). When the current layer is completed, a command of type G1 ZVAL moves the extruder to a new plane above the current one, where the process is continued.

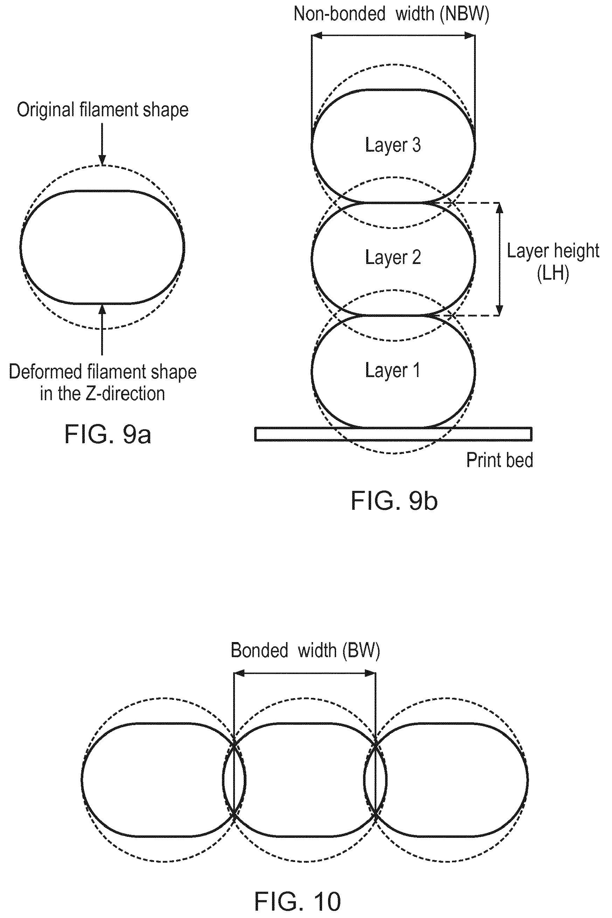

The filament coming out from the extruder nozzle is cylindrical (round in section) as it matches the shape of the extrusion nozzle (extruder head nozzle). However, because of the contact with the upper and lower layers it will be flattened in the Z-direction, as shown in figure 9a. Figure 9b shows an example including three adjacent layers where the filament of each layer is deformed due to the contact with the adjacent layer. In this example, the shape of the filament is described by two parameters: layer height (LH) and non-bonded width (NBW). The LH parameter is a basic parameter set by the user inside the slicer software and can be automatically obtained. The NBW parameter, which represents the width of the filament when not in lateral contact with other pieces of filament, is a parameter of the system that is to be tuned by the user (starting with a value slightly above the nozzle diameter as an initial estimation).

In many cases a section of extruded filament may be touching (and thus bonding to) another section of filament in the same plane. In this case, there is further deformation (squishing) from the lateral direction, as shown in figure 10. In this case, a new dimension, called bonded width (BW), is introduced that represents the width of the laterally deformed filament. This will generally be slightly shorter than NBW by a configurable amount.

In the following example this filament model will be used to generate a 3D Finite Element mesh of the extruded geometry which does not have any hanging nodes. This is achieved via the combination of a number of primitive operations ("primitives") described below. Once implemented, these primitives may be used in at least two exemplary ways:
Single pass → the appropriate primitive is used in order to add new elements to the mesh, from the start and until the entire model has been completed.
Multi-pass → primitives 1 and/or 4 (aligned case) are used to generate an initial mesh (first step) then the remaining primitives are used to re-mesh the other type of connection regions (second step).

### Primitive 1 → Independent lines and curves:

This primitive is used to model sections of filament that are not in lateral contact with other sections of filament. However, they can (and indeed may) be in vertical contact with either the print bed (for the 1st layer) or neighbouring layers. Examples where this primitive can be applied are shown in figure 11. Note that curves in G-Code format are generally treated via a piecewise linear approximation. Therefore we treat both cases in the same way.

For each G-Code path segment, defined as the segment between two successive valid G1 commands moving in the same plane, meshing by primitive 1 may be done in 2 steps:
1. Split the path into sections of maximum length ML, where ML is a user-set parameter;
2. Create a sequence of connected mesh elements that model the filament structure for each section.

The user set parameter ML is treated as a trade-off between model size (the larger ML, the smaller the model size) and accuracy (the smaller ML, the higher the accuracy).

Section elements are a combination of one or more finite elements that are used to approximate a path section. Three examples of types of section elements are shown in cross-section in figure 12.

Section element H2C is composed of two 2nd order "curvilinear" hexahedral elements, where "curvilinear" stands for the fact that the 2nd-order nodes (marked with white centre) are not in the middle of the segments but have been moved on the geometry. One H2C section element consists of two such hexahedral elements. This is an example of a more accurate but also more computationally expensive representation.

Section element H2L is composed of two 1 st order hexahedral elements. These can be easily extended to 2nd-order "linear" hexahedral elements if nodes are added in the middle of each segment. One H2L section element consists of two hexahedral elements.

Section element H1 C is composed of one 2nd order curvilinear hexahedral element. One H1C section element consists of one hexahedral element.

While an embodiment of this invention focuses on these three section element types, it is expected that the skilled in the art will be able to use these to easily create similar types of section elements. For example, such section elements could contain more hexahedral elements for increased accuracy or only one 1st order hexahedral element for reduced model size.

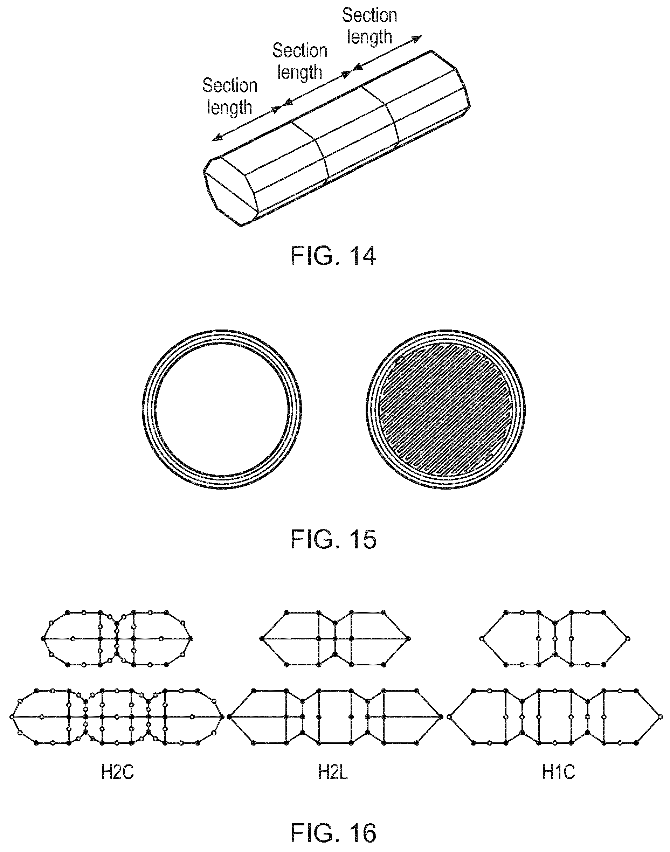

A 3D view of the H2C element is shown in figure 13, with section length representing the depth. Note that while in figure 13 the front and back face of the section element are parallel, they will be at an angle when the path to be approximated is curved. Figure 14 shows a perspective view of three connected H2C type section elements, modelling a straight G-code path segment of extruded filament.

### Primitive 2 → Parallel in-layer connections:

Parallel in-layer connections are situations where two parallel sections of filament from the same layer are close enough so that they overlap or contact (and thus bonding occurs). Examples of such cases are shown in figure 15.

The implementation for all three section element types is shown in figure 16. The one-sided schemes (figure 16, top) are to be used when the connection (bond) occurs in only one side while the two-sided schemes (figure 16, bottom) are to be used when the connection is on both sides. The connection region (the elements used to join the filament sections together) generate:
- For H2C and H2L type: four new hexahedral elements
- For H1C type: two new hexahedral elements

### Primitive 3 → Non-parallel in-layer connections:

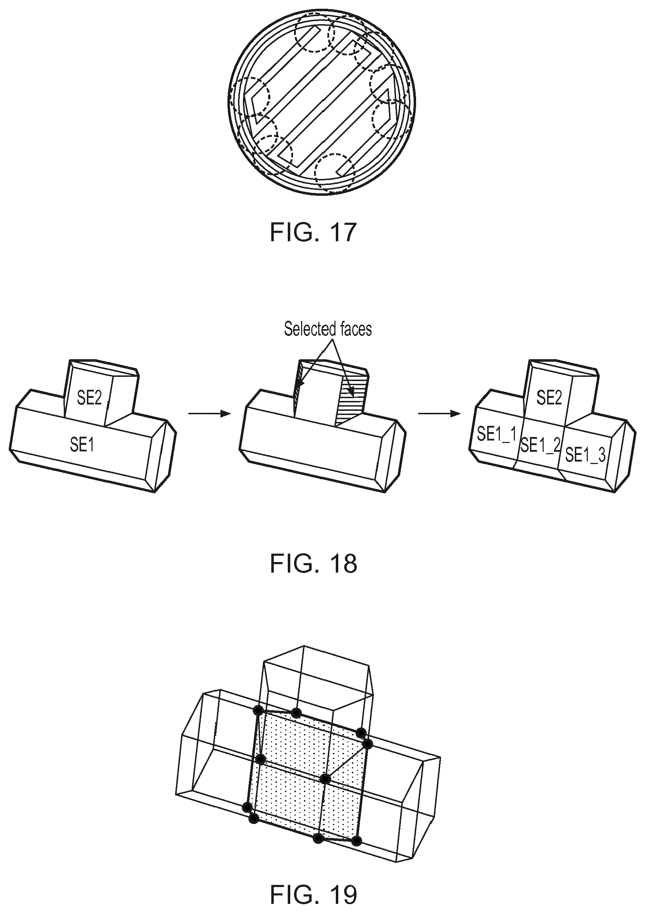

Non-parallel in-layer connections are situations when a section element intersects another section element from the same layer at an angle. An example of such a connection is given in figure 17.

In the following, an explanation of the connection algorithm for the H2L type section elements only is given, but note that this may be applied to other types of elements. Also, this example covers a one-sided (T-type) connection. However this may be extended to a two-sided (+ type) connection. Note that while the illustration shows the angle to be 90 degrees, this does not need to be the case. The process is shown in figure 18 and proceeds as follows:
- Let SE1 and SE2 be two intersecting section elements.
- Choose one section element (e.g. SE2) to be the intersecting element and the other one to be the intersected element. For example, the intersected element can be the longer of the two or the newer of the two.
- Perform the geometric intersection between intersecting and intersected section elements. One simple way to achieve that is to select the angled faces (generally those which are not parallel to the Z plane) of the intersecting element and use them as partitioning planes for the intersected element.
- The intersected element (e.g. SE1) will be split into three elements of the same type (post-fixed by _1, _2, _3).

Note that for a two-sided (+ type) connection, the total number of resulting elements will be five.

For clarity, the middle section (SE4) element is highlighted in the example shown in figure 19.

### Primitive 4 → parallel between-layer connections:

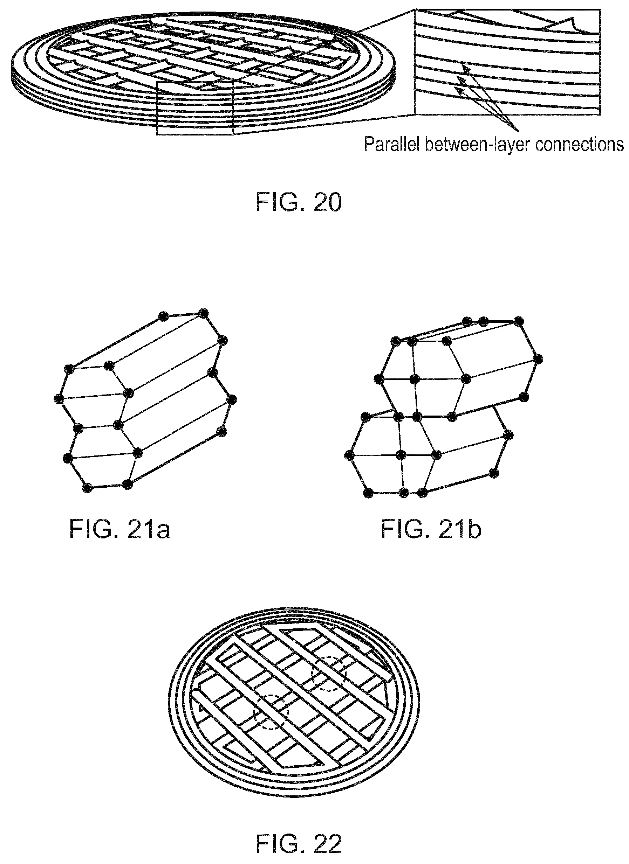

Parallel between-layer connections are connections that happen between sections of filament found in successive layers where the sections are parallel to each-other. Examples of such connections are shown in figure 20. If the section elements are horizontally aligned (figure 21 a), there is no additional work to be performed. If they are not aligned (figure 21b), the element sections should be partitioned using vertical planes defined by the intersection area. This vertical partition doubles the number of elements. Note that while this connection is shown for H2L elements, it may be applied to the other types of elements also.

### Primitive 5 → Non-parallel between-layer connections:

Non-parallel between-layer connections are connections that appear when the sections of filament on successive layers are placed at an angle to one another. For most types of infill this angle is 90 degrees, however this is not always the case. One such example is shown in figure 22.

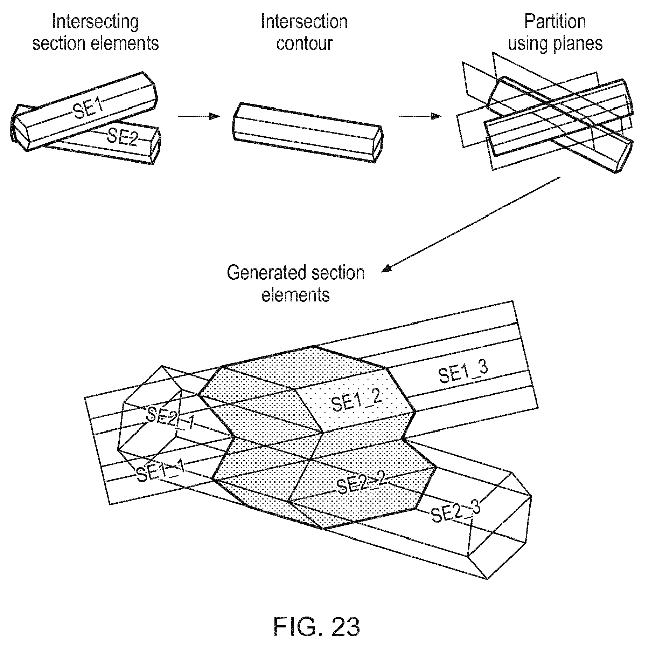

The implementation for this type of connection is again only shown for H2L type section elements, but may be applied to the other types of section elements. The steps below are illustrated in figure 23.
- Let SE1 and SE2 be two intersecting section elements.
- Compute the contour of the intersection.
- For both SE1 and SE2, create cutting planes starting from the two edges that are not parallel to the direction of extrusion for the respective element. Two cutting planes will be created for each section element.
- Partition SE1 and SE2 using their respective cutting planes. Three section elements (sub-fixed with _1,_2,_3) will be created from each original section element.

An advantage of the invention according to the embodiments described above is that by using the described method a structural analysis model which closely resembles the printed object can be generated. This in turn leads to increased simulation accuracy. In addition, the described method can be used to improve the structure of the 3D printed object such as to reduce the amount of material used while still preserving the required structural properties. The described mesh generation method can lead to a fully hexahedral mesh which is in general the most preferred mesh type for structural analysis computations.

## Claims

1. An apparatus for producing a computer generated model of a part to be 3D printed, the apparatus comprising:
means configured to create a computer generated model of the part, based on printing instructions for 3D printing the part, wherein the computer generated model represents the part as printed.

2. A method of producing a computer generated model of a part to be 3D printed, the method comprising:
creating a computer generated model of the part, based on printing instructions for 3D printing the part, wherein the computer generated model represents the part as printed.

3. The method of claim 2, wherein the computer generated model is created by simulating movement of a printer extruder head and defines the computer generated model in terms of a path of the movement of the printer extruder head when printing.

4. The method of claim 2 or claim 3, wherein the printing instructions include information indicating the size and shape of the extrusion material used to 3D print the part.

5. The method of any one of claims 2 - 4, wherein the computer generated model comprises a mesh generated based on the representation of the printed part.

6. The method of claim 5, wherein the mesh is a finite element mesh based on generic printing code (G-code) instructions.

7. The method of claim 6, wherein elements in the finite element mesh are hexahedral, tetrahedral and/or wedge elements.

8. The method of any one of claims 2 - 7, wherein the computer generated model further includes information indicating an amount of deformation which extrusion material is expected to undergo during printing, based on the extrusion material used.

9. The method of any one of claims 2 - 8, wherein the printing instructions include a combination of primitive movements, which are repeatable movement patterns for printing simple geometric shapes.

10. The method of any one of claims 2 - 9, wherein the computer generated model comprises one or more section elements, which each comprise one or more finite elements and represent an extrusion path of printing material.

11. A method of carrying out structural analysis on the computer generated model produced according to any one of claims 2 - 10, wherein the printing instructions for the computer generated model are changed based on the structural analysis to improve the properties of the computer generated model representing the mechanical properties of the printed part.

12. A method of carrying out structural analysis on the computer generated model produced according to any one of claims 2 - 10, wherein the printing instructions for the computer generated model are changed based on the structural analysis to achieve predetermined properties of the computer generated model, representing the mechanical properties of the printed part, while reducing an amount of material required to print the part represented by the computer generated model.

13. A program for carrying out the method according to any preceding claim.
